# EUROPEAN PATENT APPLICATION

(11) **EP 1 197 543 A1**
(43) Date of publication of application: **17.04.2002**
(21) Application number: 01200243.2
(22) Date of filing: 24.01.2001
(51) Int. Cl.: C10B 7/10, C10B 57/02, B01J 19/20

(54) **Apparatus and process for making char from coking coal**

(30) Priority: 13.10.2000 EP 00203570
(71) Applicant: Danieli Corus Technical Services BV, 1951 JZ Velsen-Noord (NL)
(72) Inventor: Verweij, Kees, 1943 BN Beverwijk (NL)
(74) Representative: Hansen, Willem Joseph Maria

(57) **Abstract**

The invention relates to an apparatus for making char from coking coal, comprising a screw in a housing and heating means for heating the coal.

According to the invention, the apparatus comprises at least two separate screws.

The invention also relates to a process for making char using the apparatus.

## Description

The invention relates to an apparatus for making char from coking coal, comprising a screw in a housing and heating means for heating the coal. The invention also relates to a process for making char using this apparatus.

An apparatus for making char from coal, having a screw in a housing and heating means for heating the coal, is known. Solid coal is transported through the apparatus or reactor by rotating the screw, while at the same time the coal is heated by the heating means. For transport the solid coal must be free flowing. However, when the coal reaches a certain temperature, the coal weakens and a plastic phase is formed; the plastic coal is not free flowing anymore. At a sufficient temperature and when most volatiles are volatilised from the plastic phase, the plastic phase becomes brittle. It breaks off in lumps, and proceeds to the end of the screw as a free flowing char. Char can be used as an ingredient for making iron in the foundry industry.

The coal can flow free during the first phase, when it is heated up, and during the third phase or char phase. In these phases, the coal or char is not sticky. However, during the second or plastic phase the coal is not free flowing and the transport of the coal is governed by its plasticity and the resulting sticky behaviour. The plasticity can be determined by the well-known Gieseler plasticity test, ASTM D 2639. Due to the difference between the high stickiness in the plastic phase and the non-stickiness in the first and third phase, there exists a substantial difference in residence time and voidage or space utilisation in the different zones of the apparatus; in the first and third phase a high voidage exists. High voidage will cause low heated surface to transport heat to the coal to be processed.

It is an object of the invention to provide an apparatus for making char from coal, using a screw, in which the voidage will be at least partly overcome.

It is another object of the invention to provide an apparatus for making char from coal, using a screw, which is cheaper than the known apparatus.

It is still another object of the invention to provide an apparatus for making char from coal, using a screw, which has a better mechanical performance than the known apparatus.

Yet another object of the invention is to provide a process for making char from coal which is less time-consuming than the known process.

According to a first aspect of the invention at least one of the above objects is reached with an apparatus for making char from coking coal, comprising a screw in a housing and heating means for heating the coal, in which the apparatus comprises at least two separate screws in series.

The apparatus according to the invention now comprises at least two screws in series, which can of course each be rotated at their own speed. Using two screws means that either before or after the plastic zone the coal can be rotated at a speed at which there is little or no voidage. Moreover, using two screws means that each screw will be shorter, so the mechanical stability of the apparatus will be higher.

Preferably the apparatus comprises three separate screws in series. Each phase for the making of char can now be executed with its own screw, so the voidage in each phase can be kept as low as possible.

According to a preferred embodiment each screw has been applied in its own housing. In this way the apparatus can be manufactured easier and cheaper and use and maintenance are simpler.

Preferably, each screw has its own heating means. This is because the coal or char has to be heated during each phase.

According to a preferred embodiment, each of the screws is rotatable at an adjustable speed. Because the screws each can rotate at their own speed, the voidage of the coal transported by each screw can eliminated to a high extend.

A preferred embodiment of the apparatus comprises an inlet device for introducing coal in a first housing with a first screw and first heating means for heating the coal to a predetermined temperature, the first screw being provided for mixing the coal and transporting the heated coal into a second housing with a second screw and second heating means for heating the coal until it is plastic and loses volatiles, the second screw being provided for mixing the plastic coal, heating the plastic coal sufficiently using the second heating means to turn it brittle and solid without any stickiness and transporting the thus made char into a third housing with a third screw and third heating means so as to make the coal further lose volatiles, the third screw being provided for mixing the char and heating it up to a prescribed temperature using the third heating means, and transporting it to the end of the housing and delivering it as char.

This preferred embodiment has a very efficient design. The voidage in the various screws can be controlled by decreasing or increasing the speed of the screws. The second screw, in which during use the coal will be plastic, is leading. Low voidage in the first and third screw can be controlled by decreasing the speed of these screws. The second (plastic) screw always has to be rotated at a minimum speed, because otherwise no mixing takes place.

Preferably, each screw is provided as a double screw. A double screw gives a very good mixing of the coal.

According to a second aspect of the invention, a process for making char is given using the apparatus as described above, the process comprising a first step of heating the coal, a second step of heating in which the coal is plastic and loses volatiles, and a third step in which the coal loses volatiles and becomes brittle char, in which the first step takes place in the first housing, the second step in the second housing, and the third step in the third housing.

Using this process, the achievable end temperature for the char can be higher than with one long screw, due to better mechanical stability of three screws in series compared to one long screw.

Preferably, during the first step the coal is heated to a temperature of 300 to 400° C. Preferably, the end temperature of the first phase is 1 - 50 °C below the start of the Gieseler plasticity temperature range. At these temperatures, the coal is not yet plastic .

Preferably, during the second step the coal is heated to a temperature of 450 to 500 ° C. Preferably, the end temperature of the second phase is 1 - 50 °C above the end of the Gieseler plasticity temperature range. At these temperatures, the coal will become sufficiently plastic.

Preferably, during the third step the char is heated to a temperature of approximately 600° C. At this temperature, the volatile matter content of the char is right for most applications.

According to a preferred embodiment, the screw in the second housing is rotated approximately three to twenty times as fast as the screws in the first and the third housing. In this way the voidage in the first and third housing is as low as possible.

The invention will be described referring to the accompanying drawing.

Fig. 1 shows the apparatus according to the state of the art, schematically.

Fig. 2 shows a preferred embodiment of the apparatus according to the invention as compared to the apparatus of the state of the art.

Fig. 3 shows two different embodiments of the apparatus according to the invention, as compared to the apparatus of the state of the art.

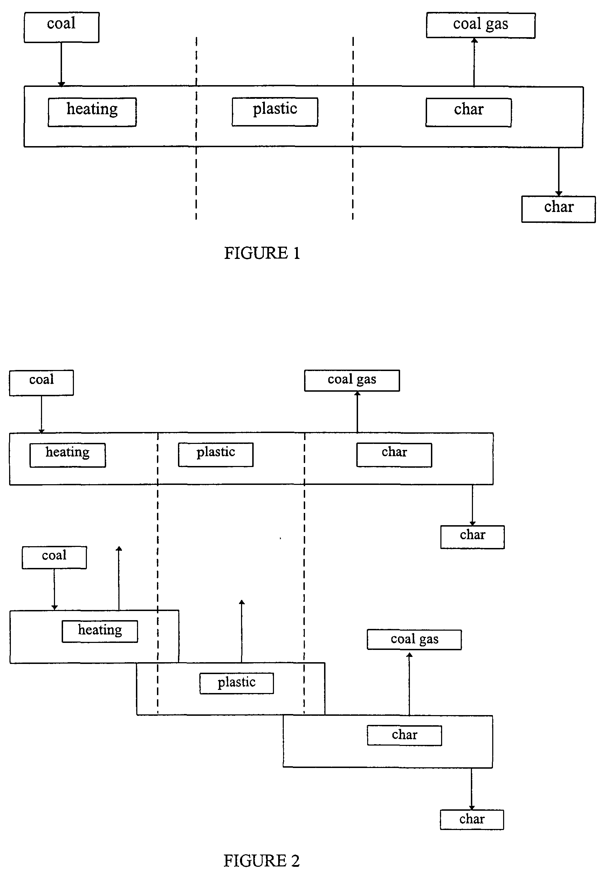

Fig. 1 shows in a schematic way an apparatus according to the state of the art, having a housing with a screw inside (not shown). Coal is entered into the housing at the inlet, and transported by the screw. At the outlet, char leaves the housing. The apparatus can be divided into three zones, respectively a first or heating zone, a second or plastic zone, and a third or char zone. In both the heating and char zone, coal gas is formed which leaves the apparatus via a separate outlet. The plastic zone is indicated as being limited by the two interrupted lines.

Fig. 2 shows the known apparatus in its upper halve, and in the lower halve an embodiment of the apparatus according to the invention. As shown, each of the heating, plastic and char zones now has its own housing with its own screw (not shown). Due to this concept, each of the screws in each of the housings can be rotated at optimal speed, so the voidage in the heating and char zone can be minimised, and the total reaction time for the forming of char in the apparatus can be kept as low as possible.

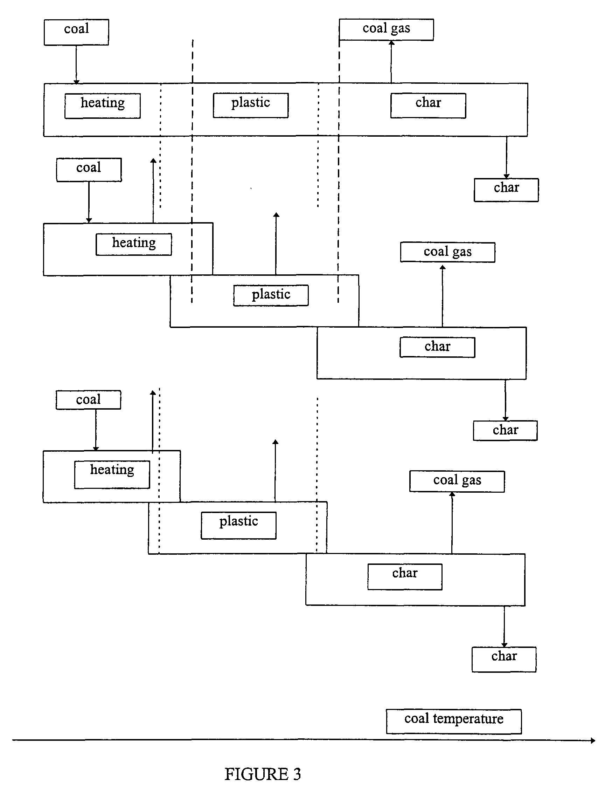

Fig. 3 shows that for one type of coal the temperature limits of the plastic zone can be as indicated by the interrupted lines, while for another type of coal the temperature limits of the plastic zone can be indicated by the dotted line. In Fig. 3, the upper embodiment again is the known apparatus. The middle apparatus is the same as shown in Fig. 2, which is suited for the coal type with the plastic limits as interrupted lines. The lower embodiment would be an apparatus which is suited for the coal type with plastic limits indicated by the dotted lines.

It will be clear that the lower the temperature limits of the plastic zone are, the shorter the housing (and the screw) for the heating zone must be. However, this is only true if the heating (in amount of energy per second) in the heating zone is constant. This means that only one apparatus can be used for different types of coal, if the heating in the heating zone can be controlled: by either decreasing the heating rate (lower heating temperature) with the same screw speed, or increasing the screw speed at the same heating temperature, the time and displacement until the lower plastic limit is reached will be shorter and longer, respectively.

During the plastic zone, the heat transfer controls the reaction and only the heat load will govern the residence time. The screw speed is only important for the mixing and the heat transfer to the plastic phase. As long as the temperature is below the upper Gieseler plasticity temperature the coal remains sticky, is resident at the same spot and will not be transported. As soon as the temperature is high enough, the coal has lost enough volatiles to turn brittle, and breaks off. The coal flows again (to the third screw).

The screws used can be single (transportation) screws, but preferably are double screws which have better mixing properties.

During use of the apparatus, the speed of the screws in the heating and char zone can be approximately 15 % of the speed of the screw in the plastic zone. For this reason, the screws in the heating and char zone can be short, and the total processing time of the coal can be short. In the heating zone, the coal is heated to a temperature of 300 to 400 °C, depending on the type of coal used. In the plastic zone, the coal reaches a temperature of 400 to 500 °C. In the char zone, the char gets a temperature of approximately 600 ° C depending on the target value of the volatile matter of the char.

The apparatus also has the great advantage that three screws are used instead of one long screw. A long screw in a long housing makes the apparatus mechanically unstable. Moreover, for the different zones now different materials for screw and housing can be used, suited for the circumstances in that zone.

## Claims

1. Apparatus for making char from coking coal, comprising a screw in a housing and heating means for heating the coal, **characterised in that** the apparatus comprises at least two separate screws in series.

2. Apparatus according to claim 1, **characterised in that** the apparatus comprises three separate screws in series.

3. Apparatus according to claim 1 or 2, **characterised in that** each screw has been applied in its own housing.

4. Apparatus according to claim 3, **characterised in that** each screw has its own heating means.

5. Apparatus according to any of the preceding claims, **characterised in that** each of the screws is rotatable at an adjustable speed.

6. Apparatus according to claim 2, **characterised in that** the apparatus comprises an inlet device for introducing coal in a first housing with a first screw and first heating means for heating the coal to a predetermined temperature, the first screw being provided for mixing the coal and transporting the heated coal into a second housing with a second screw and second heating means for heating the coal until it is plastic and loses volatiles , the second screw being provided for mixing the coal, heating the plastic coal sufficiently using the second heating means to turn it brittle and solid without stickiness and transporting the thus made char into a third housing with a third screw and third heating means so as to make the coal further lose volatiles, the third screw being provided for mixing the char and heating it up to a prescribed temperature using the third heating means, and transporting it to the end of the housing and delivering it as char.

7. Apparatus according to any of the preceding claims, **characterised in that** each screw is provided as a double screw.

8. Process for making char using the apparatus according to any of the preceding claims, the process comprising a first step of heating the coal, a second step of heating in which the coal is plastic and loses volatiles, and a third step in which the coal loses volatiles and becomes brittle char, **characterised in that** the first step takes place in the first housing, the second step in the second housing, and the third step in the third housing.

9. Process according to claim 8, **characterised in that** during the first step the coal is heated to a temperature of 300 to 400 °C.

10. Process according to claim 8 or 9, **characterised in that** during the second step the coal is heated to a temperature of 400 to 500 °C.

11. Process according to claim 8, 9 or 10, **characterised in that** during the third step the char is heated to a temperature of approximately 600° C.

12. Process according to claim 8, 9, 10 or 11, **characterised in that** the screw in the second housing is rotated approximately three to twenty times as fast as the screws in the first and the third housing.
